# EUROPÄISCHE PATENTSCHRIFT

(11) **EP 1 250 524 B1**
(45) Veröffentlichungstag und Bekanntmachung des Hinweises auf die Patenterteilung: **21.06.2006**
(21) Anmeldenummer: 00989947.7
(22) Anmeldetag: 05.12.2000
(51) Int. Cl.: F02D 41/02, F02D 41/14

(54) **VERFAHREN ZUR ENTSCHWEFELUNG EINES IN EINEM ABGASKANAL EINER VERBRENNUNGSKRAFTMASCHINE ANGEORDNETEN NOx-SPEICHERKATALYSATORS**
METHOD FOR DESULPHURISATION OF AN NOx ACCUMULATOR-CATALYST ARRANGED IN AN EXHAUST SYSTEM OF AN INTERNAL COMBUSTION ENGINE
PROCEDE DE DESULFURATION D'UN CATALYSEUR ACCUMULATEUR DE NOx MONTE DANS LE CANAL POUR GAZ D'ECHAPPEMENT D'UN MOTEUR A COMBUSTION INTERNE

(30) Priorität: 17.12.1999 DE 19961165
(43) Veröffentlichungstag der Anmeldung: 23.10.2002
(73) Patentinhaber: Volkswagen Aktiengesellschaft, 38436 Wolfsburg (DE); Umicore AG & Co. KG, 63457 Hanau-Wolfgang (DE)
(72) Erfinder: POTT, Ekkehard, 38518 Gifhorn (DE); HAHN, Hermann, 30175 Hannover (DE); HÖHNE, Jürgen, 63457 Hanau (DE); GÖBEL, Ulrich, 65795 Hattersheim (DE)
(74) Vertreter: Reinstädler, Diane
(86) Internationale Anmeldenummer: PCT/EP2000/012210
(87) Internationale Veröffentlichungsnummer: WO 2001/044630

(56) Entgegenhaltungen:
- EP-A- 0 899 430
- WO-A-99/61763
- GB-A- 2 324 052
- US-A- 5 771 685

## Beschreibung

Die Erfindung betrifft ein Verfahren zur Entschwefelung eines in einem Abgaskanal einer Verbrennungskraftmaschine angeordneten NO_{X}-Speicherkatalysators.

Es ist bekannt, zur Reinigung von Abgasen von Verbrennungskraftmaschinen Katalysatoren, insbesondere NO_{X}-Speicherkatalysatoren, einzusetzen. Dabei wird die Verbrennungskraftmaschine bevorzugt in einem Magermodus betrieben, in welchem der Lambdawert größer als 1 ist, das heißt ein Sauerstoffüberschuß bezüglich der Kraftstoffmenge im Luft-Kraftstoff-Gemisch vorliegt. In diesem Betriebsmodus fallen umweltschädliche Abgasbestandteile, wie Kohlenmonoxid CO und unvollständig verbrannte Kohlenwasserstoffe HC, in verhältnismäßig geringem Anteil an und können dank dem Sauerstoffüberschuß vollständig in weniger umweltrelevante Verbindungen umgewandelt werden. Auf der anderen Seite können die im Magermodus verhältnismäßig stark anfallenden Stickoxide NO_{X} nicht vollständig reduziert werden und werden im NO_{X}-Speicherkatalysator als Nitrate eingelagert. Eine Regeneration des NO_{X}-Absorbers erfolgt in regelmäßigen Intervallen, in denen die Verbrennungskraftmaschine in einem Fettmodus mit λ ≤ 1 betrieben, und die Reduktionsmittel CO, HC und H₂ in ausreichendem Ausmaße gebildet werden, so daß die eingelagerten Stickoxide quantitativ zu Stickstoff umgesetzt werden können. Die Freisetzung der Stickoxide aus dem NO_{X}-Speicherkatalysator wird im Fettmodus durch erhöhte Temperaturen am Katalysator unterstützt.

Neben der beschriebenen NO_{X}-Einlagerung kommt es im Magermodus auch zu einer unerwünschten SO_{X}-Einlagerung im NO_{X}-Absorber in Form von Sulfaten. Die SO_{X-}Absorption führt zu einer Reduzierung der Speicherkapazität des Absorbers und der katalytisch aktiven Oberfläche des Katalysators. Darüber hinaus kann eine Sulfatkornbildung auch korrosive Prozesse an der Katalysatoroberfläche verursachen und eine nichtreversible Schädigung des NO_{X}-Speicherkatalysators nach sich ziehen.

Es ist bekannt, in periodischen Abständen Entschwefelungsprozesse durchzuführen, die eine Beaufschlagung des NO_{X}-Speicherkatalysators mit fettem Abgas, das heißt λ ≤ 1, und eine Einstellung einer Mindesttemperatur von etwa 600 °C, welche die NO_{X-}Desorptionstemperatur übersteigt, einschließt.

Gemäß der DE 198 358 08 wird die Entschwefelung vorzugsweise nicht in konstantem Fettbetrieb der Verbrennungskraftmaschine bei einem fetten Lambdawert durchgeführt, sondern mit einer alternierenden Beaufschlagung des NO_{X}-Speicherkatalysators mit fettem und magerem Abgas. Auf diese Weise kann die Freisetzung von giftigem und unangenehm riechendem Schwefelwasserstoff H₂S, dessen Entstehung gegenüber der erwünschten Schwefeldioxidbildung SO₂ kinetisch gehemmt ist, nahezu vollständig unterdrückt werden.

Eine Detektion einer Entschwefelungsnotwendigkeit wird anhand einer nachlassenden NO_{X}-Speicheraktivität beziehungsweise eines NO_{X}-Durchbruches im mageren Abgas beispielsweise mittels NO_{X}-Sensoren erfaßt. Dabei wird ein Einbruch in der NO_{X-}Speicheraktivität erkannt, indem der gemessene NO_{X}-Durchsatz mit einer gemessenen oder modellierten NO_{X}-Durchsatzcharakteristik eines regenerierten NO_{X-}Speicherkatalysators verglichen wird. Mangels geeigneter Schwefelsensoren kann derzeit nur anhand einer einbrechenden NO_{X}-Aktivität auf eine Schwefelvergiftung geschlossen werden und nicht auf der Basis einer direkten Schwefelmessung.

Ebenso, wie die Feststellung einer Entschwefelungsnotwendigkeit, kann auch der Erfolg eines Entschwefelungsprozesses nur anhand von NO_{X}-Konzentrationen vor und hinter dem Katalysator detektiert werden, indem lediglich ein Wiedergewinn der NO_{X-}Aktivität erfaßt wird. Auch hier wird auf eine verbliebene Restschwefelmenge geschlossen, indem der gemessene NO_{X}-Durchsatz mit dem Zustand eines regenerierten NO_{X}-Speicherkatalysators verglichen wird. Nachteilig an dieser Methode ist, daß keine Verlaufskontrolle während der Entschwefelung selbst möglich ist, sondern ihr Erfolg erst nach beendigter Entschwefelung beurteilt werden kann. Da hierfür der NO_{X}-Speicherkatalysator zunächst wieder auf die Arbeitstemperatur von zirka 200°C bis 500°C gekühlt werden muß und bei mangelndem Entschwefelungserfolg gegebenenfalls erneut auf die Entschwefelungstemperatur von über 600°C aufgeheizt werden muß, ist mit dieser Methode ein erhöhter Kraftstoffverbrauch verbunden. Andererseits können übermäßig lange Entschwefelungsvorgänge thermische Schädigungen des NO_{X}-Speicherkatalysators hervorrufen.

Der Erfindung liegt die Aufgabe zugrunde, ein Verfahren zur Entschwefelung eines in einem Abgaskanal einer Verbrennungskraftmaschine angeordneten NO_{X-}Speicherkatalysators der gattungsgemäßen Art bereitzustellen, das die analoge Überwachung des Fortschrittes der Entschwefelung während des Entschwefelungsprozesses erlaubt. Dabei soll einerseits die H₂S-Bildung unterdrückt werden und andererseits die Entschwefelungsdauer mit dem tatsächlichen Beladungszustand des NO_{X}-Speicherkatalysators abgestimmt werden, so daß der Kraftstoffverbrauch geringgehalten wird und eine exzessive thermische Schädigung des NO_{X}-Speicherkatalysators vermieden werden kann.

Erfindungsgemäß wird diese Aufgabe durch ein Verfahren zur Entschwefelung mit den in den unabhängigen Ansprüchen 1 und 9 genannten Merkmalen gelöst. Es wurde gefunden, daß aufgrund der im Verlauf der Entschwefelung abnehmenden Menge eingelagerten Sulfates zunehmend geringere Reduktionsmittelmengen während der fetten Betriebsphasen verbraucht werden. Damit verbunden werden stetig kürzer werdende Intervalle beobachtet, in denen eine nennenswerte Sulfatreduktion stattfindet. Dadurch wird erfindungsgemäß eine Überwachung des Fortschrittes der Entschwefelung anhand eines Verlaufes einer Größe von Intervallen während des Entschwefelungsprozesses möglich, wobei das Intervall von einem Beginn einer fetten Betriebsphase bis zu einem Unterschreiten eines vorgebbaren Lambdaschwellenwertes stromab des NO_{X}-Speicherkatalysators dauert. Der Schwellenwert wird hierfür kleiner als 1 und größer als ein vorgegebener Lambdawert vor dem NOₓ-Speicherkatalysator gewählt.

In einer bevorzugten Ausgestaltung des erfindungsgemäßen Verfahrens ist vorgesehen, den Beginn einer fetten Betriebsphase durch das Unterschreiten des vorgebbaren Lambdaschwellenwertes vor dem NO_{X}-Speicherkatalysator zu definieren.

In einer weiteren bevorzugten Ausgestaltung des Verfahrens ist vorgesehen, eine Differenz eines n-ten Intervalls und eines vorausgegangenen (n-i)-ten Intervalls zu berechnen, wobei i eine ganze positive Zahl bedeutet. Bei einer mindestens einmaligen Unterschreitung eines vorgebbaren Differenzgrenzwertes durch die Differenz wird die Entschwefelung beendet. Es ist hierbei besonders bevorzugt, eine Differenz des n-ten Intervalls und eines unmittelbar vorausgegangenen (n-1)-ten Intervalls zu berechnen.

Eine vorteilhafte Ausgestaltung des Verfahrens sieht vor, daß die Größe eines Intervalls seiner zeitlichen Länge entspricht. Ein n-tes Intervall kann somit durch eine Zeitmesssung seines Beginns und Endes erfaßt werden. In einer alternativen Ausgestaltung des erfindungsgemäßen Verfahrens ist vorgesehen, daß eine während der Dauer eines Intervalls durch den NO_{X}-Speicherkatalysator durchgesetzte Abgasmasse die Größe des Intervalls bestimmt. Diese kann beispielsweise mittels eines an sich bekannten Luftmassenmessers ermittelt werden. Eine noch höhere Genauigkeit kann gemäß einer weiteren bevorzugten Ausgestaltung erzielt werden, indem die Größe eines Intervalls anhand einer während der Dauer des Intervalls den NO_{X}-Katalysator durchgesetzten Reduktionsmittelmasse erfaßt wird. Die durchgesetzte Reduktionsmittelmasse kann in bekannter Weise aus der gemessenen durchgesetzten Abgasmasse und dem vor dem NO_{X}-Speicherkatalysator vorliegenden Lambdawert berechnet werden.

Gemäß einem weiteren erfindungsgemäßen Verfahren kann der Fortschritt des Entschwefelungsprozesses ebenso anhand eines zeitlichen Verlaufs einer Lambdasondenspannung stromab des NO_{X}-Speicherkatalysators, welche nach einem vorgebbaren Intervall nach Beginn einer n-ten fetten Betriebsphase ermittelt wird, überwacht werden, da bei Verwendung üblicher Sprungantwort-Lambdasonden und konstanten fetten Betriebsphasen die hinter dem NO_{X}-Speicherkatalysator gemessene Lambdasondenspannung mit fortschreitender Entschwefelung stetig höhere Werte annimmt. Dies ist wiederum auf die abnehmende Menge eingelagerten Sulfates zurückzuführen, die ein immer früher einsetzendes Abfallen des Lambdawertes hinter dem NO_{X}-Speicherkatalysator während einer fetten Betriebsphase bedingt.

In einer bevorzugten Ausgestaltung des erfindungsgemäßen Verfahrens wird der Verlauf der Entschwefelung begutachtet, indem die Lambdasondenspannung hinter dem NO_{X}-Speicherkatalysator nach einer vorgebbaren Zeitspanne nach Beginn jeder fetten Betriebsphase gemessen und ihr Verlauf über die Dauer der Entschwefelung verfolgt wird.

In weiteren alternativen Ausführungsformen wird die Lambdasondenspannung nach einer vorgebbaren durchgesetzten Reduktionsmittelmasse oder Abgasmasse nach Beginn jeder fetten Betriebsphase gemessen und ihr Verlauf verfolgt.

Es ist ferner sehr bevorzugt, daß das vorgebbare Intervall, unabhängig ob dieses einer Zeitspanne, einer Abgasmasse oder einer Reduktionsmittelmasse entspricht, mit der Länge der fetten Betriebsphasen übereinstimmt. Gemäß dieser Ausgestaltung wird die maximale Lambdasondenspannung hinter dem NO_{X}-Speicherkatalysator am Ende jeder fetten Betriebsphase ermittelt.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Anordnung eines Katalysatorsystems in einem Abgaskanal einer Verbrennungskraftmaschine;
- Figur 2: einen Verlauf eines vor und hinter einem NO_{X}-Speicherkatalysator gemessenen Lambdawertes während einer Entschwefelung;
- Figur 3: einen Verlauf der Zeitintervalle in Abhängigkeit von der Anzahl der fetten Betriebsintervalle;
- Figur 4: einen Verlauf eines vor und hinter einem NO_{X}-Speicherkatalysator gemessenen Lambdawertes während einer dynamisch gesteuerten Entschwefelung und
- Figur 5: einen Verlauf einer Lambdasondenspannung hinter dem NO_{X-}Speicherkatalysator während einer Entschwefelung.

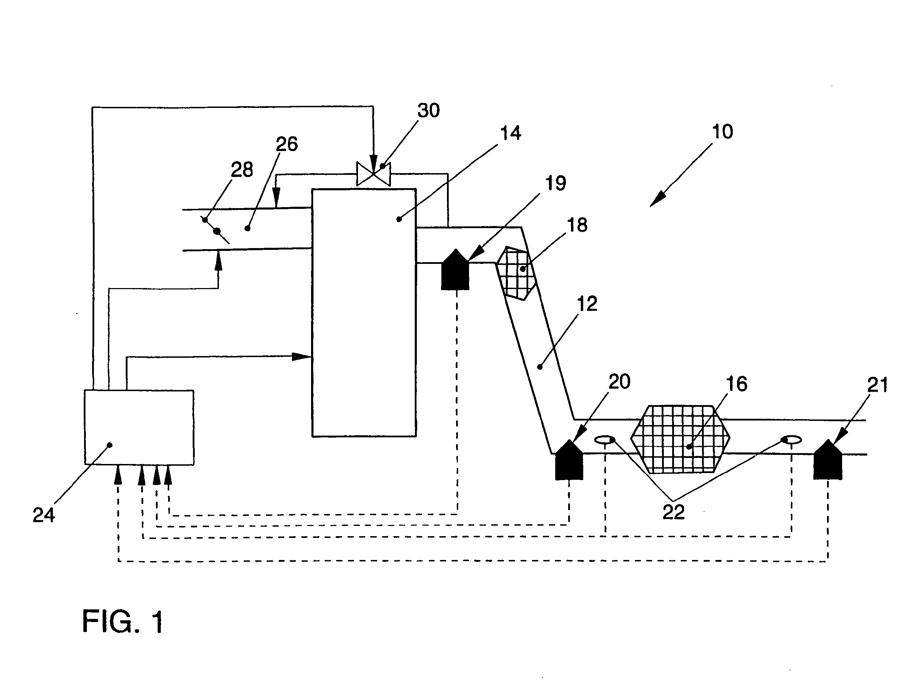

In der Figur 1 ist eine Anordnung eines Katalysatorsystems 10 in einem Abgaskanal 12 einer Verbrennungskraftmaschine 14 schematisch dargestellt. Das Katalysatorsystem 10 umfaßt einen NO_{X}-Speicherkatalysator 16, einen Vorkatalysator 18 sowie verschiedene Temperatursensoren 22. Femer sind Gassensoren 19, 20, 21 an verschiedenen Positionen des Abgaskanals 12 angeordnet. Diese Gassensoren dienen der Detektionen von mindestens einer Gaskomponente eines Abgases der Verbrennungskraftmaschine 14 und stellen entsprechend dem Gehalt der gemessenen Gaskomponente ein Signal an das Motorsteuergerät 24 bereit. Derartige Gassensoren 19, 20, 21 sind bekannt und können beispielsweise Lambdasonden oder NO_{X-}Sensoren sein.

Alle von den Temperatursensoren 22 und den Gassensoren 19, 20, 21 bereitgestellten Signale werden an ein Motorsteuergerät 24 weitergeleitet. In Reaktion auf die gemessenen Gaswerte kann ein Arbeitsmodus der Verbrennungskraftmaschine 14 durch das Motorsteuergerät 24 geregelt werden. Ist beispielsweise ein Arbeitsmodus mit λ < 1, das heißt eine fette Atmosphäre, erforderlich, so wird eine Sauerstoffkonzentration in einem Saugrohr 26 stromaufwärts der Verbrennungskraftmaschine 14 gesenkt, indem das Motorsteuergerät 24 beispielsweise einen Volumenstrom angesaugter Luft mittels einer Drosselklappe 28 reduziert und/oder sauerstoffarmes Abgas über ein Abgasrückflußventil 30 in das Saugrohr 26 zurückführt. Auf diese Weise erhöhen sich die Anteile reduzierender Gaskomponenten CO, HC, H₂ im Abgas relativ zu einem Anteil an Sauerstoff.

Um dagegen einen Arbeitsmodus mit λ > 1 einzustellen, also eine magere Atmosphäre, wird die Drosselklappe 28 geöffnet. Unter diesen Bedingungen, in denen ein Unterschuß reduzierender Gaskomponenten im Abgas herrscht, können diese nahezu vollständig im Vorkatalysator 18 umgesetzt, das heißt oxidiert, werden. Hingegen werden im Überschuß vorhandener Stickoxide NO_{X}, aber auch SO₂ im NO_{X-}Speicherkatalysator 16 absorbiert. In wiederkehrenden Abständen wird in Abhängigkeit einer NO_{X}-Speicherkapazität der Katalysator mit einem fetten Abgas beaufschlagt, um ihn zu regenerieren. Dabei wird das zuvor absorbierte NO_{X} an einer katalytisch aktiven Oberfläche des NO_{X}-Speicherkatalysators 16 reduziert. Gleichzeitig in Form von Sulfat in den NO_{X}-Speicherkatalysator 16 eingelagertes SO₂ wird bei diesem Regenerierungsprozeß jedoch nicht entfernt, da die Reversibilität der SO₂-Einlagerun im Gegensatz zu der Einlagerung von NO_{X} wesentlich höhere Temperaturen erfordert.

Eine Entschwefelungsnotwendigkeit kann beispielsweise anhand einer NO_{X-}Speicheraktivität des NO_{X}-Speicherkatalysators 16 festgestellt werden. Eine NO_{X-}Durchbruchcharakteristik kann mittels eines Gassensors 21 erfaßt werden, der eine NO_{X}-Konzentration hinter dem NO_{X}-Speicherkatalysator 16 detektiert. Durch Abgleich dieses Wertes mit theoretischen oder empirischen Modellen oder mit einer vor dem NO_{X}-Speicherkatalysator 16 vorliegenden NO_{X}-Konzentration, die beispielsweise mit mindestens einem der Gassensoren 19 oder 20 erfaßt werden kann, kann auf eine Schwefelbeladung des NO_{X}-Speicherkatalysators 16 geschlossen werden. Liegt eine sogenannte Schwefelvergiftung des NO_{X}-Speicherkatalysators 16 vor, so wird dieser zunächst auf eine Temperatur gebracht, die einer Mindestentschwefelungstemperatur entspricht oder diese übersteigt. Die aktuelle Temperatur am NO_{X}-Speicherkatalysator 16 läßt sich beispielsweise über die Temperatursensoren 22 erfassen.

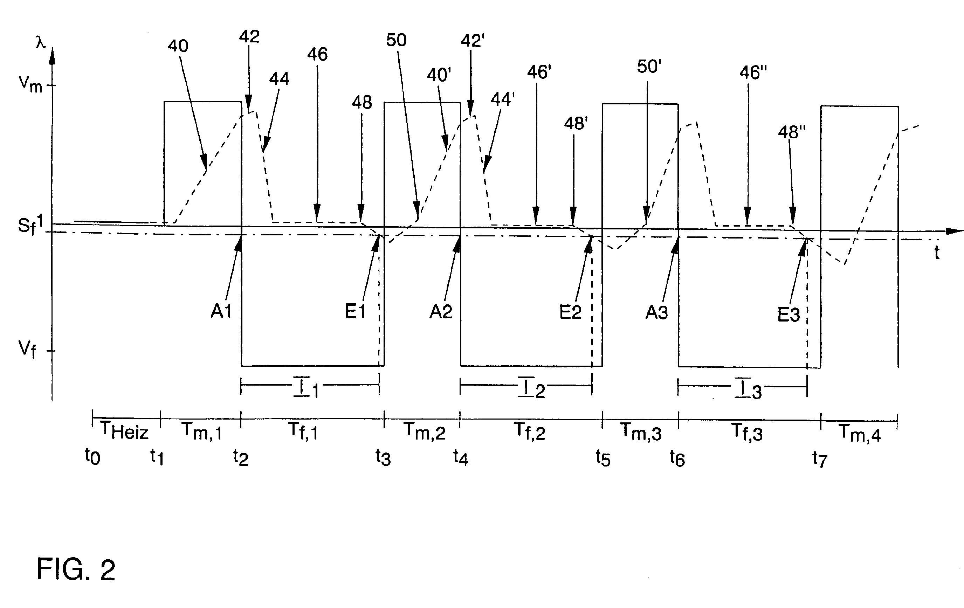

Figur 2 zeigt beispielhaft einen vereinfachten Verlauf eines Lambdawertes vor und hinter dem NO_{X}-Speicherkatalysator 16 während einer Entschwefelungsprozedur.

Hierin stellt die durchgezogene Linie den vorgebbaren Verlauf des Lambdawertes vor dem NO_{X}-Speicherkatalysator 16 dar, der mittels des Gassensors 20 erfaßt werden kann. Die gestrichelte Linie gibt dagegen den Verlauf des mit dem Gassensor 21 hinter dem NO_{X}-Speicherkatalysator 16 gemessenen Lambdawertes wieder. Nach Feststellung einer Entschwefelungsnotwendigkeit zum Zeitpunkt t₀ wird zunächst in einer Aufheizphase T_{Heiz} der NO_{X}-Speicherkatalysator 16 auf die notwendige Entschwefelungstemperatur eingestellt. Dies geschieht in bekannter Weise, indem beispielsweise mindestens ein Betriebsparameter der Verbrennungskraftmaschine 14 beeinflußt wird, um die Abgastemperatur zu erhöhen.

Sobald die Mindesttemperatur zum Zeitpunkt t₁ erreicht wird, wird die Verbrennungskraftmaschine 14 mit Hilfe des Motorsteuergerätes 24 derart geregelt, daß sich vor dem NO_{X}-Speicherkatalysator 16 ein vorgebbarer Lambdawert Vₘ, der größer als 1 ist, über die Dauer einer ersten Magerphase T_{m,1} einstellt. Bedingt durch ein Totvolumen des NO_{X}-Speicherkatalysators 16 und eine Sauerstoffeinlagerung in diesen wird ein Anstieg des Lambdawertes hinter dem NO_{X}-Speicherkatalysator 16 zeitverzögert beobachtet. In einem Bereich 40 steigt dann der Lambdawert hinter dem NO_{X}-Speicherkatalysator 16 an, wobei die Steilheit des Anstieges um so größer ist, je höher die Lambdavorgabe Vₘ ist. An einem Zeitpunkt t₂ erfolgt ein Wechsel von dem mageren in den einen fetten Betriebsmodus, woraufhin das Motorsteuergerät 24 die Verbrennungskraftmaschine 14 auf einen fetten Arbeitsmodus umstellt, so daß sich über eine erste Fettphase T_{f,1} ein Lambdawert < 1 vor dem NO_{X}-Speicherkatalysator 16 entsprechend der Vorgabe V_{f} einstellt. Abhängig vom Totvolumen des NO_{X-}Speicherkatalysators 16 steigt der Lambdawert hinter dem NO_{X}-Speicherkatalysator 16 nach Wechsel in den fetten Betriebsmodus in einem Bereich 42 noch kurzfristig an, um dann in einem Bereich 44 steil auf einen Lambdawert = 1 abzufallen. Der Lambdawert verharrt so lange bei einem Wert = 1, bis der im NO_{X}-Speicherkatalysator 16 eingelagerte Sauerstoff, das gespeicherte Sulfat und eventuell noch vorhandenes Nitrat mit den in der fetten Betriebsphase im Überschuß vorhandenen Reduktionsmitteln soweit umgesetzt sind, bis er im Bereich 48 auf einen Wert < 1 abzudriften beginnt. Zum Zeitpunkt t₃ wird wiederum ein Wechsel des Betriebsmodus der Verbrennungskraftmaschine 14 eingeleitet, wodurch die zweite magere Betriebsphase T_{m,2} beginnt. Eine Reaktion des Lambdawertes nach dem NO_{X}-Speicherkatalysator 16 auf die veränderten Betriebsbedingungen setzt volumenbedingt wiederum verzögert ein, so daß kurz nach Beginn der zweiten Magerphase T_{m,2} ein Minimum durchlaufen wird, das unterhalb des Schwellenwertes S_{f} liegt. Es folgt ein Anstieg des Lambdawertes im Bereich 50, dessen Steilheit nicht nur von der Lage der Lambdavorgabe Vₘ abhängt, sondern auch von einer in dieser Phase erfolgenden Sauerstoffeinlagerung in den NO_{X}-Speicherkatalysator 16. Nach Ausschöpfung der Sauerstoffeinlagerungskapazität wird im Bereich 40' ein steiler Anstieg des Lambdawertes beobachtet, wobei in diesem Bereich die Steilheit ausschließlich von der Lage der Lambdavorgabe Vₘ bestimmt wird. Nach Initiierung der zweiten Fettphase T_{f,2} erfolgt wieder, nach einer zeitlichen Verzögerung (Bereich 42'), ein rascher Lambdaabfall nach dem NO_{X-}Speicherkatalysator 16 im Bereich 44', der von einer Phase 46' gefolgt wird, in welcher der Lambdawert bei λ = 1 verharrt.

Aufgrund der im Vergleich zur ersten Fettphase T_{f,1} geringeren Menge eingelagerten Sulfates ist die Dauer der Phase 46', in welcher die Reduktionsmittel vollständig umgesetzt werden, im Vergleich zur Phase 46 reduziert. Infolgedessen wird das Einsetzen eines Lambdaabfalls in der Phase 48' in Richtung der Lambdafettvorgabe V_{f} zu einem früheren Zeitpunkt nach Beginn der Fettphase beobachtet als in der ersten Fettphase T_{f,1}. Dieser Trend setzt sich in den folgenden Fettphasen fort. So ist ein in der dritten Fettphase T_{f,3} beobachteter Bereich 46" gegenüber dem Bereich 46' noch weiter verkürzt und ein Abfallen des Lambdawertes unterhalb 1 im Bereich 48" wird noch früher beobachtet.

Erfindungsgemäß ist es nun möglich, den Fortschritt der Entschwefelung zu verfolgen, indem die Länge eines Zeitintervalls Iₙ, welches sich von Beginn einer fetten Betriebsphase bis zu einem Unterschreiten eines vorgebbaren Lambdaschwellenwertes S_{f} stromab des NO_{X}-Speicherkatalysators 16 erstreckt, für jede fette Betriebsphase ermittelt wird und über den Verlauf der Entschwefelung verfolgt wird. Die Zeitpunkte, an denen der Lambdawert hinter dem NO_{X}-Speicherkatalysator 16 den Lambdaschwellenwert S_{f} erreicht beziehungsweise unterschreitet, sind in der Grafik mit den Bezugszeichen E₁, E₂ und E₃ gekennzeichnet. Um einen einheitlichen Beginn einer fetten Betriebsphase T_{f,n} zu gewährleisten, hat es sich als vorteilhaft erwiesen, ein Unterschreiten des Lambdaschwellenwertes S_{f} vor dem NO_{X}-Speicherkatalysator 16 an den Punkten A₁, A₂, A₃ als Beginn der fetten Betriebsphase zu definieren. Somit kann auch ein weniger idealer Verlauf des Lambdawertes vor dem NO_{X}-Speicherkatalysator 16 berücksichtigt werden.

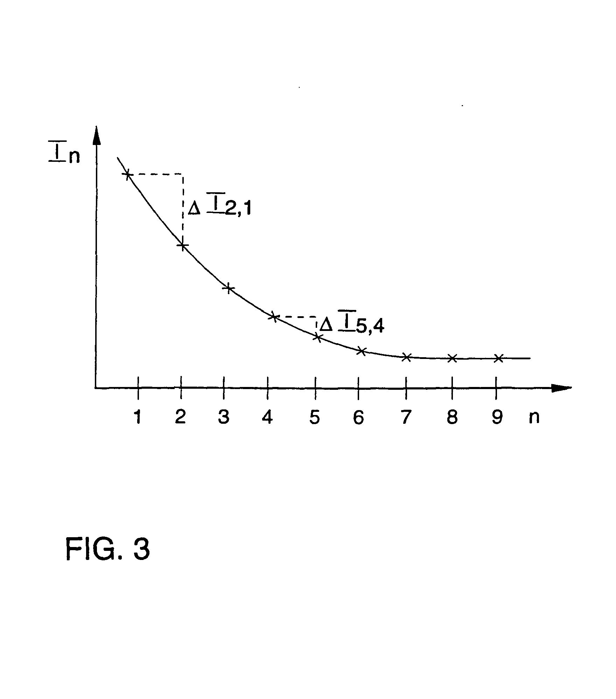

Figur 3 stellt den Verlauf der in der beschriebenen Weise ermittelten Zeitintervalle Iₙ in Abhängigkeit von der Anzahl n der fetten Betriebsintervalle dar. Während am Anfang der Entschwefelungsprozedur die Zeitintervalle Iₙ noch sehr lang sind, so nehmen sie im folgenden Verlauf zunächst rasch ab, um sich später einem Grenzwert zu nähern.

Ein sich praktisch nicht mehr änderndes Intervall Iₙ zeigt an, daß die Entschwefelung im wesentlichen vollständig verlaufen ist. Erfindungsgemäß erfolgt eine Verlaufskontrolle der Entschwefelungsprozedur, indem beispielsweise die Differenz eines Zeitintervalls Iₙ und eines vorausgegangenen Zeitintervalls Iₙ₋₁berechnet wird. Vorzugsweise wird die Differenz eines Zeitintervalls Iₙ und eines unmittelbar vorausgegangenen Zeitintervalls Iₙ₋₁ bestimmt. In Figur 3 sind beispielhaft die Intervalldifferenzen zwischen der ersten und der zweiten fetten Betriebsphase ΔI_{2,1} und der vierten und fünften fetten Betriebsphase ΔI_{5,4} dargestellt. Die Größe der Intervalldifferenzen ΔI_{n,n-1} nimmt im Verlaufe der Entschwefelungsprozedur rasch ab. Erfindungsgemäß ist nun ein Abbruchskriterium für die Entschwefelung dadurch gegeben, daß eine aktuell ermittelte Intervalldifferenz ΔI_{n,n-1} einen vorgebbaren Differenzgrenzwert ΔI_{G} unterschreitet. Um das Verfahren gegenüber Betriebsschwankungen zuverlässiger zu gestalten, kann auch ein mehrmaliges Unterschreiten des vorgebbaren Differenzgrenzwertes ΔI_{G}, beispielsweise ein zweimaliges Unterschreiten, als Abbruchskriterium für die Entschwefelung gewählt werden.

Praktisch kann die Ermittlung eines Zeitintervalls Iₙ beispielsweise dadurch erfolgen, daß die Zeitpunkte seines Beginns und seines Endes direkt erfaßt werden. Dies geschieht etwa, indem die Sonde 20 vor dem NO_{X}-Speicherkatalysator 16 die aktuellen Lambdawerte an das Motorsteuergerät 24 weiterleitet. Der Zeitpunkt, an dem der Schwellenwert S_{f} von dem Lambdawert vor dem NO_{X}-Speicherkatalysator 16 unterschritten wird, wird von dem Motorsteuergerät 24 erkannt und als Anfang eines Intervalls Iₙ registriert. Der Zeitpunkt, an dem auch hinter dem NO_{X}-Speicherkatalysator 16 der von der Gassonde 21 gemessene Lambdawert den Schwellenwert S_{f} erreicht, wird von dem Motorsteuergerät 24 als Endpunkt eines Intervalls In erkannt. Das Motorsteuergerät 24 berechnet daraufhin die Länge des Intervalls In, die Differenz des aktuellen Intervalls Iₙ und eines vorausgegangenen Intervalls I_{n,n-i}. Stellt das Motorsteuergerät 24 fest, daß ein vorgegebenes Abbruchskriterium erfüllt wurde, beispielsweise indem ein Differenzgrenzwert △I_{G} unterschritten wurde, so beendet das Motorsteuergerät 24 die Entschwefelungsprozedur, indem es durch die Stellmittel der Drosselklappe 28 und des Abgasrückflußventils 30 die Betriebsbedingungen der Verbrennungskraftmaschine 14 entsprechend einem Normalbetrieb regelt.

In Abweichung zu der beschriebenen Prozedur kann die Länge eines Zeitintervalls Iₙ auch erfaßt werden, indem eine Reduktionsmittelmasse m_{Red,n} oder eine Abgasmasse m_{Gas,n} ermittelt wird, die vom Zeitpunkt des Abtauchens des Lambdawertes vor dem NO_{X}-Speicherkatalysator 16 unter den Schwellenwert S_{f} bis zum Abtauchen des Lambdawertes hinter dem NO_{X}-Speicherkatalysator 16 unter den Schwellenwert S_{f} die Abgasanlage durchströmt. Die Berechnung der Reduktionsmittelmasse m_{Red,n} kann in an sich bekannter und hier nicht näher zu beschreibender Weise aus einem gemessenen Abgasmassenstrom und einem Lambdawert erfolgen. Die Überwachung der Entschwefelung anhand von durchgesetzten Gasmassen anstatt von Zeitintervallen hat den Vorteil einer erhöhten Unempfindlichkeit gegenüber schwankenden Betriebsbedingungen.

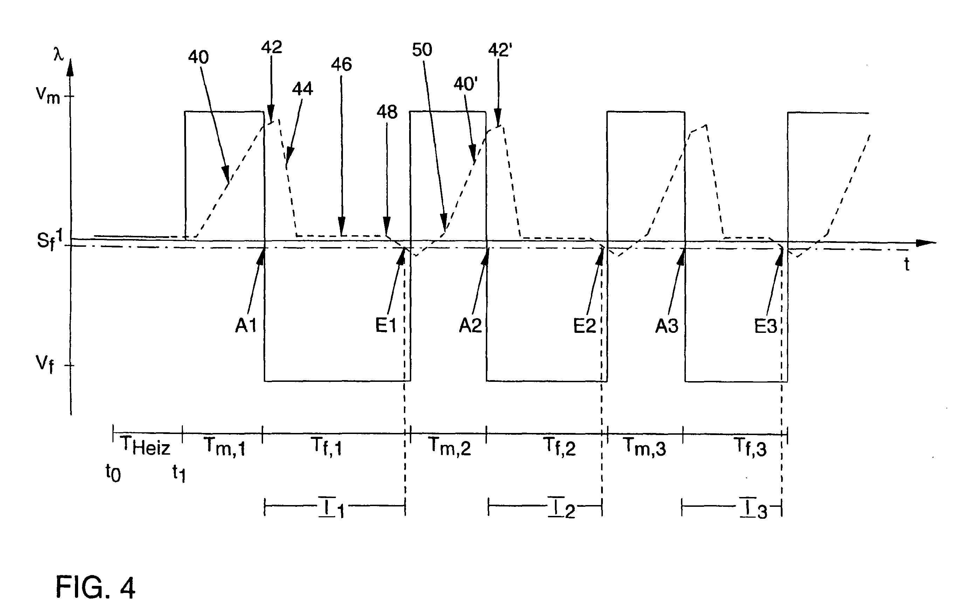

In einer stark bevorzugten Ausführungsform der vorliegenden Erfindung ist vorgesehen, einen Betriebswechsel von einem fetten Betriebsmodus T_{f,n} in einen mageren Betriebsmodus T_{m,n} dadurch auszulösen, daß der Lambdawert hinter dem NO_{X-}Speicherkatalysator 16 den Schwellenwert S_{f} unterschreitet (Punkte Eₙ in Figur 2). Die Lambdaverläufe vor und hinter dem NO_{X}-Speicherkatalysator 16 gemäß einer derartig dynamisch gesteuerten Entschwefelung sind in Figur 4 dargestellt. In dieser Verfahrensvariante entsprechen die Längen der Zeitintervalle Iₙ und die Längen der entsprechenden Fettphasen T_{f,n} einander exakt. Entsprechend nehmen die Längen der Fettphasen T_{f,n} im Verlauf des Entschwefelungsverfahrens progressiv ab. Der Vorteil dieser Ausgestaltung des Verfahrens besteht in einer erfolgreichen Unterdrückung des Schadstoffdurchbruches, der mit einem Abfall des Lambdawertes hinter dem NO_{X}-Speicherkatalysator 16 unter 1 einhergeht. Sinngemäß gelten die vorstehend beschriebenen Ausführungsmerkmale nicht nur für zeitlich bestimmte Intervalle, sondern auch für Intervalle, die auf der Basis von Abgas- oder Reduktionsmittelmasse bestimmt werden.

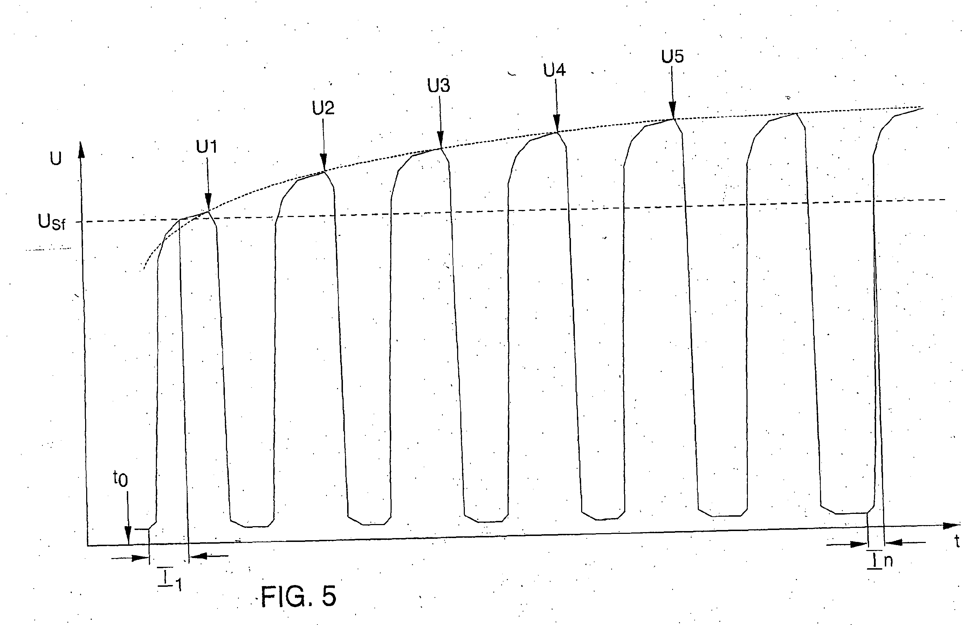

Gemäß einer unabhängigen Ausführung des vorliegenden Verfahrens kann der Fortschritt des Entschwefelungsprozesses auch anhand des zeitlichen Verlaufs einer Lambdasondenspannung Uₙ stromab des NO_{X}-Speicherkatalysators 16 während der fetten Betriebsphasen T_{f,n} verfolgt werden. Aufgrund der abnehmenden Menge eingelagerten Sulfates in den NO_{X}-Speicherkatalysator 16 wird, bei konstanten Längen der Fettintervalle T_{f,n}, ein immer stärkeres Abfallen des Lambdawertes hinter dem NO_{X}-Speicherkatalysator 16 unterhalb 1 beobachtet (vgl. Figur 2). Verfahrensgemäß wird die Lambdasondenspannung Uₙ nach einem konstanten vorgebbaren Intervall nach Beginn einer n-ten fetten Betriebsphase T_{f,n} erfaßt. Dabei kann vorteilhafterweise der Beginn der fetten Betriebsphase T_{f,n} wiederum durch einen Abfall des Lambdawertes vor dem NO_{X}-Speicherkatalysator 16 unterhalb des Lambdaschwellenwertes S_{f}, der die oben genannte Definition besitzt, bestimmt werden. Das vorgebbare Intervall kann dabei eine Zeitspanne sein oder aber eine den NO_{X-}Speicherkatalysator 16 durchgesetzte, vorgebbare Abgasmasse m_{Gas} oder Reduktionsmittelmasse m_{Red}. Vorteilhafterweise wird das vorgebbare Intervall entsprechend einer Länge einer fetten Betriebsphase T_{f,n} gewählt. Gemäß dieser Ausgestaltung wird die Lambdasondenspannung Uₙ also am Ende einer fetten Betriebsphase T_{f,n} erfaßt. Der Verlauf der Lambdasondenspannung hinter dem NO_{X-}Speicherkatalysator 16 während der Entschwefelung ist in Figur 5 dargestellt. Hierin ist erkennbar, daß die Länge eines Zeitintervalls Iₙ während einer fetten Betriebsphase T_{f,n} bis zum Erreichen einer dem Lambdaschwellenwert S_{f} entsprechenden Lambdasondenspannung U_{Sf} mit zunehmender Entschwefelungsdauer progressiv abnimmt. Damit verbunden ist ein immer stärker werdender Anstieg der Lambdasondenspannung während der Fettphasen T_{f,n}. Ein zweckmäßiges Abbruchskriterium für die Entschwefelung kann beispielsweise wiederum dadurch gegeben sein, daß die Differenz ΔU_{n,n-i} einer Lambdasondenspannung Uₙ und einer vorausgegangenen Lambdasondenspannung Uₙ₋ᵢ einen vorgebbaren Differenzgrenzwert ΔU_{G} unterschreitet.

Wird der Fortschritt einer Entschwefelung anhand einer Lambdasondenspannung Uₙ überwacht, muß zwangsläufig mit konstanten Längen von Fettphasen T_{f,n} gearbeitet werden. Aus diesem Grunde geht diese Ausführungsform der vorliegenden Erfindung mit einem stärker werdenden Durchbruch von Schadstoffen wie Kohlenmonoxid und unverbrannten Kohlenwasserstoffen einher. Vorteilhaft ist hierbei jedoch, daß in den einzelnen Fettphasen T_{f,n} eine quantitative Durchspülung des NO_{X-}Speicherkatalysators 16, die auch untere Katalysatorschichten einschließt, mit der fetten Abgasatmosphäre erreicht wird. Die Entschwefelungsdauer kann auf diese Weise erheblich verkürzt werden.

In den oben aufgeführten Ausführungsbeispielen wurde die erfindungsgemäße Überwachung des Entschwefelungsverfahrens anhand eines Verlaufes des Lambdawertes vor dem NO_{X}-Speicherkatalysator 16 gemäß einem vorgegebenen Rechteckprofil erläutert. Das erfindungsgemäße Verfahren ist jedoch mit gleichem Erfolg anwendbar, wenn andere Verläufe des Lambdawertes vor dem NO_{X-}Speicherkatalysator 16 während der Entschwefelung zugrunde gelegt werden, beispielsweise in Form eines Dreieckprofils oder auch komplizierteren Mustern. Es hat sich ferner als vorteilhaft erwiesen, wenn ein Wechsel von einem mageren in einen fetten Betriebsmodus der Verbrennungskraftmaschine durch ein Überschreiten eines vorgebbaren oberen Lambdaschwellenwertes Sₘ hinter dem NO_{X}-Speicherkatalysator 16 ausgelöst wird, wobei Sₘ größer als 1 und kleiner als die Lambdamagervorgabe Vₘ gewählt wird. Es ist ferner möglich, den Wechsel zwischen den mageren und fetten Betriebsmodi mit definierten Verzögerungszeiten nach Über- und Unterschreitung der Schwellenwerte Sₘ beziehungsweise S_{f} hinter dem NO_{X}-Speicherkatalysator 16 auszulösen.

Um die erfindungsgemäßen Beobachtungsgrößen des Zeitintervalls Iₙ oder der Lambdasondenspannung Uₙ besonders reproduzierbar erfassen zu können, ist es zweckmäßig, die Mager- und Fett-Lambdavorgaben Vₘ und V_{f} während der Entschwefelung möglichst nicht zu variieren. Das gleiche gilt für eine Variierung der Verzögerungszeiten bei der Betriebsartenumschaltung. In der Praxis können strikte Lambdavorgaben unter bestimmten Betriebsbedingungen zu unerwünschten Effekten, beispielsweise Momenteneinbrüchen, führen. Es hat sich erwiesen, daß unter solchen Bedingungen eine geringfügige Variation der Lambdavorgaben für eine erfolgreiche Anwendung des erfindungsgemäßen Verfahrens nicht kritisch ist. Schwankungen der Beobachtungsgrößen aufgrund variierender Lambdavorgaben können durch die Anwendung strengerer Abbruchskriterien, wie etwa ein hinreichend häufiges Unterschreiten eines vorgegebenen Differenzgrenzwertes, berücksichtigt werden.

Insgesamt stellt das erfindungsgemäße Verfahren ein empfindliches Instrument zur Überwachung des Fortschrittes einer Entschwefelung bereit. Die Dauer einer Entschwefelung kann somit auf den tatsächlich vorliegenden Bedarf abgestimmt werden. Auf diese Weise kann einerseits eine Einsparung von Kraftstoff und andererseits eine thermische Schädigung des Katalysators infolge exzessiver Entschwefelungszeiten vermieden werden. Femer kann durch Anwendung des Verfahrens eine nicht schwefelbedingte Schädigung des NO_{X}-Speicherkatalysators 16 detektiert werden. Wird nämlich nach Beendigung eines der erfindungsgemäßen Entschwefelungsverfahren eine erwartungsgemäße NO_{X}-Speicheraktivität nicht wieder erlangt, so kann auf eine nicht schwefelbedingte Schädigung des NO_{X-}Speicherkatalysators 16, beispielsweise auf eine thermische Schädigung, geschlossen werden.

## Patentansprüche

1. Verfahren zur Entschwefelung eines in einem Abgaskanal einer Verbrennungskraftmaschine angeordneten NO_{X}-Speicherkatalysators mit mindestens einer stromab des NO_{X}-Speicherkatalysators angeordneten Lambdasonde, wobei die Verbrennungskraftmaschine für die Entschwefelung alternierend in einem mageren Betriebsmodus mit λ > 1 und einem fetten Betriebsmodus mit λ < 1 betrieben wird, **dadurch gekennzeichnet, daß** der Fortschritt der Entschwefelung anhand eines Verlaufs einer Größe von Intervallen (Iₙ) während des Entschwefelungsprozesses überwacht wird, wobei das Intervall (Iₙ) von einem Beginn einer n-ten fetten Betriebsphase (T_{f,n}) bis zu einem Unterschreiten eines vorgebbaren Lambdaschwellenwertes (S_{f}) stromab des NO_{X}-Speicherkatalysators (16) dauert und der vorgebbare Lambdaschwellenwert (S_{f}) kleiner als 1 und größer als ein vorgegebener Lambdawert (V_{f}) vor dem NO_{X}-Speicherkatalysator (16) ist.

2. Verfahren nach Anspruch 1, **dadurch gekennzeichnet, daß** der Beginn einer n-ten fetten Betriebsphase (T_{f,n}) durch ein Unterschreiten des vorgebbaren Lambdaschwellenwertes (S_{f}) vor dem NO_{X}-Speicherkatalysator (16) definiert wird.

3. Verfahren nach einem der vorhergehenden Ansprüche, **dadurch gekennzeichnet, daß** ein Wechsel von einem fetten in einen mageren Modus durch das Unterschreiten des vorgebbaren Lambdaschwellenwertes (S_{f}) stromab des NO_{X}-Speicherkatalysators (16) ausgelöst wird.

4. Verfahren nach einem der vorhergehenden Ansprüche, **dadurch gekennzeichnet, daß** eine Differenz (ΔI_{n,n-i}) eines n-ten Intervalls (Iₙ) und eines vorausgegangenen (n-i)-ten Intervalls (Iₙ₋ᵢ) berechnet wird, wobei (i) eine ganze positive Zahl bedeutet, und bei einer mindestens einmaligen Unterschreitung eines vorgebbaren Differenzgrenzwertes (ΔI_{G}) durch die Differenz (ΔI_{n,n-i}) die Entschwefelung beendet wird.

5. Verfahren nach Anspruch 4, **dadurch gekennzeichnet, daß** eine Differenz (ΔI_{n,n-1}) des n-ten Intervalls (Iₙ) und eines unmittelbar vorausgegangenen (n-1)-ten Intervalls (Iₙ₋₁) berechnet wird.

6. Verfahren nach einem der Ansprüche 1 bis 5, **dadurch gekennzeichnet, daß** die Größe eines Intervalls (Iₙ) seiner zeitlichen Länge entspricht.

7. Verfahren nach einem der Ansprüche 1 bis 5, **dadurch gekennzeichnet, daß** die Größe eines Intervalls (Iₙ) einer während der Dauer des Intervalls (Iₙ) den NO_{X-}Speicherkatalysator (16) durchgesetzten Abgasmasse (m_{Gas,n}) entspricht.

8. Verfahren nach Anspruch 7, **dadurch gekennzeichnet, daß** die Größe eines Intervalls (Iₙ) einer während der Dauer des Intervalls (Iₙ) den NOₓ₋Speicherkatalysator (16) durchgesetzten Reduktionsmittelmasse (m_{Red,n}) entspricht.

9. Verfahren zur Entschwefelung eines in einem Abgaskanal einer Verbrennungskraftmaschine angeordneten NO_{X}-Speicherkatalysators mit mindestens einer stromab des NO_{X}-Speicherkatalysators angeordneten Lambdasonde, wobei die Verbrennungskraftmaschine für die Entschwefelung alternierend in einem mageren Betriebsmodus mit λ > 1 und einem fetten Betriebsmodus mit λ < 1 betrieben wird, **dadurch gekennzeichnet, daß** bei fetten Betriebsphasen (T_{f}) mit konstanter Länge der Fortschritt der Entschwefelung anhand eines Verlaufs einer Lambdasondenspannung (Uₙ) stromab des NO_{X}-Speicherkatalysators (16), welche nach einem vorgebbaren Intervall nach Beginn einer n-ten fetten Betriebsphase (T_{f,n}) ermittelt wird, überwacht wird.

10. Verfahren nach Anspruch 9, **dadurch gekennzeichnet, daß** der Beginn der n-ten fetten Betriebsphase (T_{f,n}) durch ein Unterschreiten eines vorgebbaren Lambdaschwellenwertes (S_{f}) vor dem NO_{X}-Speicherkatalysator (16) definiert wird und S_{f} kleiner als 1 und größer als ein vorgegebener Lambdawert (V_{f}) vor dem NO_{X}-Speicherkatalysator (16) ist.

11. Verfahren nach einem der Ansprüche 9 bis 10, **dadurch gekennzeichnet, daß** das vorgebbare Intervall einer Zeitspanne entspricht.

12. Verfahren nach einem der Ansprüche 9 bis 10, **dadurch gekennzeichnet, daß** das vorgebbare Intervall einer den NO_{X}-Speicherkatalysator (16) durchgesetzten Abgasmasse (m_{Gas}) entspricht.

13. Verfahren nach einem der Ansprüche 9 bis 10, **dadurch gekennzeichnet, daß** das vorgebbare Intervall einer den NO_{X}-Speicherkatalysator (16) durchgesetzten Reduktionsmittelmasse (m_{Red}) entspricht.

14. Verfahren nach einem der Ansprüche 9 bis 13, **dadurch gekennzeichnet, daß** das vorgebbare Intervall der Länge der fetten Betriebsphasen (T_{f}) entspricht.

15. Verfahren nach einem der Ansprüche 9 bis 14, **dadurch gekennzeichnet, daß** eine Differenz (ΔU_{n,n-i}) der Lambdasondenspannung (Uₙ) einer n-ten fetten Betriebsphase (T_{f,n}) und mit einer Lambdasondenspannung (Uₙ₋ᵢ) einer vorausgegangenen (n-i)-ten fetten Betriebsphase (T_{f,n-i}) berechnet wird, wobei i eine ganze positive Zahl bedeutet, und bei einer mindestens einmaligen Unterschreitung eines vorgebbaren Differenzgrenzwertes (ΔU_{G}) durch die Differenz (ΔU_{n,n-i}) die Entschwefelung beendet wird.

16. Verfahren nach Anspruch 15, **dadurch gekennzeichnet, daß** eine Differenz (ΔU_{n,n-1}) der Lambdasondenspannung (Uₙ) einer n-ten fetten Betriebsphase und einer Lambdasondenspannung (Uₙ₋₁) einer unmittelbar vorausgegangenen (n-1)-ten fetten Betriebsphase berechnet wird.

17. Verfahren nach einem der vorhergehenden Ansprüche 1 bis 16, **dadurch gekennzeichnet, daß** der zeitliche Verlauf des Lambdawertes vor dem NO_{X-}Speicherkatalysator (16) während der Entschwefelung einem Rechteckprofil entspricht.

18. Verfahren nach einem der vorhergehenden Ansprüche 1 bis 16, **dadurch gekennzeichnet, daß** der zeitliche Verlauf des Lambdawertes vor dem NO_{X-}Speicherkatalysator (16) während der Entschwefelung einem Dreieckprofil entspricht.

19. Verfahren nach einem der vorhergehenden Ansprüche 1 bis 18, **dadurch gekennzeichnet, daß** ein Wechsel von einem mageren in einen fetten Betriebsmodus der Verbrennungskraftmaschine (14) durch ein Überschreiten eines vorgebbaren Lambdaschwellenwertes (Sₘ) stromab des NO_{X-}Speicherkatalysators (16) ausgelöst wird, wobei der vorgebbare Lambdaschwellenwert (Sₘ) größer als 1 und kleiner als ein vorgegebener Lambdawert (Vₘ) vor dem NO_{X}-Speicherkatalysator (16) ist.

20. Verfahren nach einem der vorhergehenden Ansprüche 1 bis 19, **dadurch gekennzeichnet, daß** der Wechsel zwischen den mageren und fetten Betriebsmodi mit definierten Verzögerungszeiten nach Über- und Unterschreitung des oberen beziehungsweise des unteren Schwellenwertes des stromab des NO_{X}-Speicherkatalysators (16) vorliegenden Lambdawertes ausgelöst wird.

## Claims

1. Method for the desulphurization of an NOₓ storage catalytic converter arranged in an exhaust pipe of an internal combustion engine with at least one lambda sensor arranged downstream of the NOₓ storage catalytic converter, the internal combustion engine, for the desulphurization, being operated alternately in a lean operating mode with λ > 1 and a rich operating mode with λ < 1, **characterized in that** the progress of the desulphurization is monitored on the basis of a curve of a variable of intervals (Iₙ) during the desulphurization process, the interval (Iₙ) lasting from the start of an n-th rich operating phase (T_{f,n}) until the lambda value drops below a predeterminable lambda threshold value (S_{f}) downstream of the NOₓ storage catalytic converter (16), and the predeterminable lambda threshold value (S_{f}) being less than 1 and greater than a predetermined lambda value (V_{f}) upstream of the NOₓ storage catalytic converter (16).

2. Method according to Claim 1, **characterized in that** the start of an n-th rich operating phase (T_{f,n}) is defined by lambda dropping below the predeterminable lambda threshold value (S_{f}) upstream of the NOₓ storage catalytic converter (16).

3. Method according to one of the preceding claims, **characterized in that** a change from a rich mode to a lean mode is triggered by lambda dropping below the predeterminable lambda threshold value (S_{f}) downstream of the NOₓ storage catalytic converter (16).

4. Method according to one of the preceding claims, **characterized in that** a difference (ΔI_{n,n-i}) between an n-th interval (Iₙ) and a preceding (n-i)-th interval (Iₙ₋ᵢ) is calculated, where (i) denotes a positive integer number, and the desulphurization is terminated in the event of the difference (ΔI_{n,n-i}) dropping below a predeterminable difference limit value (ΔI_{G}) at least once.

5. Method according to Claim 4, **characterized in that** a difference (ΔI_{n,n-1}) between the n-th interval (Iₙ) and an immediately preceding (n-1)-th interval (Iₙ₋₁) is calculated.

6. Method according to one of Claims 1 to 5, **characterized in that** the variable of an interval (Iₙ) corresponds to its temporal length.

7. Method according to one of Claims 1 to 5, **characterized in that** the variable of an interval (Iₙ) corresponds to an exhaust-gas mass (m_{Gas,n}) which has passed through the NOₓ storage catalytic converter (16) over the duration of the interval (Iₙ)

8. Method according to Claim 7, **characterized in that** the variable of an interval (Iₙ) corresponds to a reducing-agent mass (m_{Red,n}) which has passed through the NOₓ storage catalytic converter (16) over the duration of the interval (Iₙ).

9. Method for the desulphurization of an NOₓ storage catalytic converter arranged in an exhaust pipe of an internal combustion engine with at least one lambda sensor arranged downstream of the NOₓ storage catalytic converter, the internal combustion engine, for the desulphurization, being operated alternately in a lean operating mode with λ > 1 and a rich operating mode with λ < 1, **characterized in that** in the case of rich operating phases (T_{f}) of constant length, the progress of the desulphurization is monitored on the basis of a curve of the lambda sensor voltage (Uₙ) downstream of the NOₓ storage catalytic converter (16) which is determined after a predeterminable interval after the start of an n-th rich operating phase (T_{f,n}).

10. Method according to Claim 9, **characterized in that** the start of the n-th rich operating phase (T_{f,n}) is defined by lambda dropping below a predeterminable lambda threshold value (S_{f}) upstream of the NOₓ storage catalytic converter (16) and S_{f} is less than 1 and greater than a predetermined lambda value (V_{f}) upstream of the NOₓ storage catalytic converter (16).

11. Method according to either of Claims 9 and 10, **characterized in that** the predeterminable interval corresponds to a period of time.

12. Method according to either of Claims 9 and 10, **characterized in that** the predeterminable interval corresponds to an exhaust-gas mass (m_{Gas}) which has passed through the NOₓ storage catalytic converter (16).

13. Method according to one of Claims 9 to 10, **characterized in that** the predeterminable interval corresponds to a reducing-agent mass (m_{Red}) which has passed through the NOₓ storage catalytic converter (16).

14. Method according to one of Claims 9 to 13, **characterized in that** the predeterminable interval corresponds to the length of the rich operating phases (T_{f}).

15. Method according to one of Claims 9 to 14, **characterized in that** a difference (ΔU_{n,n-i}) between the lambda sensor voltage (Uₙ) of an n-th rich operating phase (T_{f,n}) and a lambda sensor voltage (Uₙ₋ᵢ) of a preceding (n-i)-th rich operating phase (T_{f,n-i}) is calculated, where i denotes a positive integer number, and the desulphurization is terminated if the difference (ΔU_{n,n-i}) drops below a predeterminable difference limit value (ΔU_{G}) at least once.

16. Method according to Claim 15, **characterized in that** a difference (ΔU_{n,n-1}) between the lambda sensor voltage (Uₙ) of an n-th rich operating phase and a lambda sensor voltage (Uₙ₋₁) of an immediately preceding (n-1)-th rich operating phase is calculated.

17. Method according to one of the preceding Claims 1 to 16, **characterized in that** the time curve of the lambda value upstream of the NOₓ storage catalytic converter (16) during the desulphurization corresponds to a square-wave profile.

18. Method according to one of the preceding Claims 1 to 16, **characterized in that** the time curve of the lambda value upstream of the NOₓ storage catalytic converter (16) during the desulphurization corresponds to a delta-wave profile.

19. Method according to one of the preceding Claims 1 to 18, **characterized in that** a change from a lean operating mode to a rich operating mode of the internal combustion engine (14) is triggered by a predeterminable lambda threshold value (Sₘ) being exceeded downstream of the NOₓ storage catalytic converter (16), the predeterminable lambda threshold value (Sₘ) being greater than 1 and less than a predetermined lambda value (Vₘ) upstream of the NOₓ storage catalytic converter (16).

20. Method according to one of the preceding Claims 1 to 19, **characterized in that** the change between the lean and rich operating modes is triggered with defined delay times after lambda has exceeded or dropped below the upper or lower threshold value for the lambda value present downstream of the NOₓ storage catalytic converter (16).

## Revendications

1. Procédé de désulfuration d'un catalyseur à accumulation de NOx disposé dans un tuyau d'échappement d'un moteur à combustion interne, comprenant au moins une sonde lambda disposée en aval du catalyseur à accumulation de NOx, le moteur à combustion interne fonctionnant pour la désulfuration en alternance en mode de fonctionnement à mélange pauvre avec λ > 1 et en mode de fonctionnement à mélange riche avec λ < 1, **caractérisé en ce que** la progression de la désulfuration est contrôlée à l'aide de l'allure d'une valeur d'intervalles (Iₙ) pendant le processus de désulfuration, l'intervalle (Iₙ) s'étendant depuis le début d'une n^{ième} phase de fonctionnement riche (T_{f,n}) jusqu'au dépassement par le bas d'une valeur de seuil lambda prédéfinissable (S_{f}) en aval du catalyseur à accumulation de NOx (16) et la valeur de seuil lambda prédéfinissable (S_{f}) étant inférieure à 1 et supérieure à une valeur lambda prédéfinie (V_{f}) avant le catalyseur à accumulation de NOx (16).

2. Procédé selon la revendication 1, **caractérisé en ce que** le début d'une n^{ième} phase de fonctionnement riche (T_{f,n}) est défini par le dépassement par le bas de la valeur de seuil lambda prédéfinissable (S_{f}) avant le catalyseur à accumulation de NOx (16).

3. Procédé selon l'une quelconque des revendications précédentes, **caractérisé en ce qu'**un passage d'un mode riche en mode pauvre est déclenché par le dépassement par le bas de la valeur de seuil lambda prédéfinissable (S_{f}) en aval du catalyseur à accumulation de NOx (16).

4. Procédé selon l'une quelconque des revendications précédentes, **caractérisé en ce qu'**une différence (ΔI_{n,n-i}) d'un n^{iéme} intervalle (Iₙ) et d'un (n-i)^{ième} intervalle (Iₙ₋ᵢ) précédent est calculée, (i) signifiant un nombre entier positif et la désulfuration étant achevée lors d'au moins un dépassement unique par le bas d'une valeur limite de différence prédéfinissable (ΔI_{G}) par la différence (ΔI_{n,n-i}).

5. Procédé selon la revendication 4, **caractérisé en ce qu'**une différence (△I_{n,n-1}) du n^{ième} intervalle (Iₙ) et d'un (n-1)^{ième} intervalle (Iₙ₋₁) immédiatement précédent est calculée.

6. Procédé selon l'une quelconque des revendications 1 à 5, **caractérisé en ce que** la valeur d'un intervalle (Iₙ) correspond à sa durée dans le temps.

7. Procédé selon l'une quelconque des revendications 1 à 5, **caractérisé en ce que** la valeur d'un intervalle (Iₙ) correspond à un volume de gaz d'échappement (m_{Gas,n}) ayant parcouru le catalyseur à accumulation de NOx (16) pendant la durée de l'intervalle (Iₙ).

8. Procédé selon la revendication 7, **caractérisé en ce que** la valeur d'un intervalle (Iₙ) correspond à un volume d'agent réducteur (m_{Red,n}) ayant parcouru le catalyseur à accumulation de NOx (16) pendant la durée de l'intervalle (Iₙ).

9. Procédé de désulfuration d'un catalyseur à accumulation de NOx disposé dans un tuyau d'échappement d'un moteur à combustion interne ayant au moins une sonde lambda disposée en aval du catalyseur à accumulation de NOx, le moteur à combustion interne fonctionnant pour la désulfuration en alternance en mode de fonctionnement à mélange pauvre avec λ > 1 et en mode de fonctionnement à mélange riche avec λ < 1, **caractérisé en ce que** dans les phases de fonctionnement riche (T_{f}) de longueur constante, on surveille la progression de la désulfuration à l'aide d'une allure d'une tension de la sonde lambda (Uₙ) en aval du catalyseur à accumulation de NOx (16), laquelle est déterminée après un intervalle prédéfinissable après le début d'une n^{ième} phase de fonctionnement riche (T_{f,n}).

10. Procédé selon la revendication 9, **caractérisé en ce que** le début de la n^{ième} phase de fonctionnement riche (T_{f,n}) est défini par le dépassement par le bas d'une valeur seuil lambda prédéfinissable (S_{f}) avant le catalyseur à accumulation de NOx (16) et S_{f} étant inférieure à 1 et supérieure à une valeur lambda prédéfinie (V_{f}) avant le catalyseur à accumulation de NOx (16).

11. Procédé selon l'une quelconque des revendications 9 à 10, **caractérisé en ce que** l'intervalle prédéfinissable correspond à une durée.

12. Procédé selon l'une quelconque des revendications 9 à 10, **caractérisé en ce que** l'intervalle prédéfinissable correspond à un volume de gaz d'échappement (m_{Gas}) ayant parcouru le catalyseur à accumulation de NOx (16).

13. Procédé selon l'une quelconque des revendications 9 à 10, **caractérisé en ce que** l'intervalle prédéfinissable correspond à un volume d'agent réducteur (m_{Red,n}) ayant parcouru le catalyseur à accumulation de NOx (16).

14. Procédé selon l'une quelconque des revendications 9 à 13, **caractérisé en ce que** l'intervalle prédéfinissable correspond à la longueur des phases de fonctionnement riches (T_{f}).

15. Procédé selon l'une quelconque des revendications 9 à 14, **caractérisé en ce que** l'on calcule une différence (△U_{n,n-i}) entre la tension de la sonde lambda (Uₙ) d'une n^{ième} phase de fonctionnement riche (T_{f,n}) et une tension de la sonde lambda (Un-1) d'une (n-i)^{ième} phase de fonctionnement riche (T_{f,n-i}) précédente, i signifiant un nombre entier positif, et la désulfuration étant achevée lors d'au moins un dépassement unique par le bas d'une valeur limite de différence prédéfinissable (ΔU_{G}) par la différence (ΔU_{n,n-i}).

16. Procédé selon la revendication 15, **caractérisé en ce que** l'on calcule une différence (△U_{n,n-1}) entre la tension de la sonde lambda (Uₙ) d'une n^{ième} phase de fonctionnement riche et une tension de la sonde lambda (Uₙ₋₁) d'une (n-1)^{ième} phase de fonctionnement riche immédiatement précédente.

17. Procédé selon l'une quelconque des revendications précédentes 1 à 16, **caractérisé en ce que** l'allure dans le temps de la valeur lambda avant le catalyseur à accumulation de NOx (16) pendant la désulfuration correspond à un profil rectangulaire.

18. Procédé selon l'une quelconque des revendications 1 à 16, **caractérisé en ce que** l'allure dans le temps de la valeur lambda avant le catalyseur à accumulation de NOx (16) pendant la désulfuration correspond à un profil triangulaire.

19. Procédé selon l'une quelconque des revendications 1 à 18, **caractérisé en ce que** un passage d'un mode de fonctionnement en mélange pauvre à un mode de fonctionnement en mélange riche du moteur à combustion interne (14) est déclenché par un dépassement d'une valeur de seuil lambda prédéfinissable (Sₘ) en aval du catalyseur à accumulation de NOx (16), la valeur de seuil lambda prédéfinissable (Sₘ) étant supérieure à 1 et inférieure à une valeur lambda prédéfinie (Vₘ) avant le catalyseur à accumulation de NOx (16).

20. Procédé selon l'une quelconque des revendications précédentes 1 à 19, **caractérisé en ce que** le passage entre les modes de fonctionnement en mélange pauvre et en mélange riche est déclenché avec des temps de retard définis après le dépassement par le haut et par le bas de la valeur de seuil supérieure, respectivement inférieure de la valeur lambda existant en aval du catalyseur à accumulation de NOx (16).
